# EUROPÄISCHE PATENTSCHRIFT

(11) **EP 0 712 753 B1**
(45) Veröffentlichungstag und Bekanntmachung des Hinweises auf die Patenterteilung: **04.08.1999**
(21) Anmeldenummer: 95117382.2
(22) Anmeldetag: 04.11.1995
(51) Int. Cl.: B60K 17/08, B60K 17/344

(54) **Wechselgetriebe für Kraftfahrzeuge mit einer vorn eingebauten, querliegenden Antriebseinheit**
Gearbox for motorcars with a transverse installed front engine
Boîte de vitesses pour véhicule à moteur avec machine de propulsion transversale installée à l'avant

(30) Priorität: 15.11.1994 DE 4440742
(43) Veröffentlichungstag der Anmeldung: 22.05.1996
(73) Patentinhaber: Ford-Werke Aktiengesellschaft, 50735 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Lequis, Rolf, D-53773 Hennef (DE); Deidewig, Hartmut, D-51503 Roesrath (DE); Adams, Gerd, D-42799 Leichlingen (DE)
(74) Vertreter: Messulam, Alec Moses

(56) Entgegenhaltungen:
- EP-A- 0 242 338
- EP-A- 0 363 257
- US-A- 5 143 167

## Beschreibung

Die Erfindung bezieht sich auf ein Wechselgetriebe für Kraftfahrzeuge mit einer vorn eingebauten, querliegenden Antriebseinheit, der im Oberbegriff des Patentanspruches 1 erläuterten Art.

Aus der DE-PS 36 21 620 ist ein Wechselgetriebe für Kraftfahrzeuge, mit einer vorn eingebauten, querliegenden Antriebseinheit bekannt, wobei das sich an das Ausgangszahnrad des Wechselgetriebes anschließende Ausgangsgetriebe ein Differentialgetriebe zum Antrieb der Vorderräder des Kraftfahrzeuges ist.

Bei dem bekannten Wechselgetriebe wird an das Differentialgetriebe ein Kegelrad-Winkelgetriebe über eine Hohlwelle angeschlossen, so daß unter Beibehaltung einer Vielzahl von Bauteilen ein Kraftfahrzeug mit Vierradantrieb bereitgestellt werden kann. Bei dem bekannten Wechselgetriebe wird weiterhin vorgeschlagen, das Differentialgetriebe nur als Gehäuse zu verwenden, das über die Hohlwelle den Kegelrad-Winkeltrieb antreibt, um für ein Kraftfahrzeug nur einen Hinterradantrieb zur Verfügung zu stellen.

Das bekannte Wechselgetriebe weist zwar den Vorteil auf, daß es im Zuge eines Bausatzes sowohl für ein Kraftfahrzeug mit Vorderradantrieb, mit Vierradantrieb als auch nur mit Hinterradantrieb verwendet werden kann, die Beibehaltung des Differentialgehäuses und der Hohlwelle machen jedoch eine starke Einschränkung in der Auslegung des Kegelrad-Winkeltriebs erforderlich. Durch die Anordnung des Kegelrad-Winkeltriebs seitlich versetzt zum Ausgangszahnrad, kommt dieses in den Bereich der benachbarten Kupplung und des Motors und kann hierdurch aus Platzgründen nicht in der optimalen Durchmesserauslegung untergebracht werden.

Die Aufgabe der Erfindung ist es, ein Wechselgetriebe für Kraftfahrzeuge, mit einer vorn eingebauten, querliegenden Antriebseinheit der im Oberbegriff des Patentanspruches 1 erläuterten Art zu schaffen, das unter Beibehaltung des Getriebegehäuses die Auslegung des Wechselgetriebes für ein Kraftfahrzeug mit nur einem Hinterradantrieb ermöglicht, wobei für die Auslegung des Kegelrad-Winkelgetriebes weitgehende Freiheit verbleibt.

Gemäß der Erfindung wird diese Aufgabe gelöst, indem ein Wechselgetriebe für Kraftfahrzeuge mit einer vorn eingebauten, querliegenden Antriebseinheit, der im Oberbegriff des Patentanspruches 1 aufgezeigten Art die im Kennzeichenteil des Patentanspruches 1 aufgezeigten Merkmale aufweist.

Dadurch, daß das Ausgangsgetriebe unmittelbar ein Kegelrad-Winkelgetriebe ist, bestehend aus einem Tellerrad und einem Ritzel und das Tellerrad auf einem Achskörper aus dem Material des Getriebegehäuses angeordnet ist, der im Bauraum des Differentialgetriebes angeordnet ist, kann das Getriebegehäuse, wie es für ein Kraftfahrzeug mit Vorderradantrieb ausgelegt wird, auch für ein Kraftfahrzeug mit Hinterradantrieb im wesentlichen unverändert beibehalten werden, wobei eine optimale Nutzung des Bauraumes und eine tiefliegende Anordnung der Kardanwelle ermöglicht wird, wodurch Gewichts- und Kosteneinsparungen erreicht werden.

In den weiteren Ansprüchen sind zweckmäßige Ausgestaltungen der Lagerung des Kegelrad-Winkelgetriebes aufgezeigt.

Die Erfindung wird anhand zweier in den Zeichnungen gezeigter Ausführungsbeispiele näher erläutert. Es zeigt:
- Fig. 1: eine Getriebeaufrollung im Schnitt eines Wechselgetriebes gemäß der Erfindung mit einer Ausführungsform des Kegelrad-Winkelgetriebe;
- Fig. 2: eine Getriebeaufrollung im Schnitt eines Wechselgetriebes gemäß der Erfindung mit einer anderen Ausführungsform des Kegelrad-Winkelgetriebe.

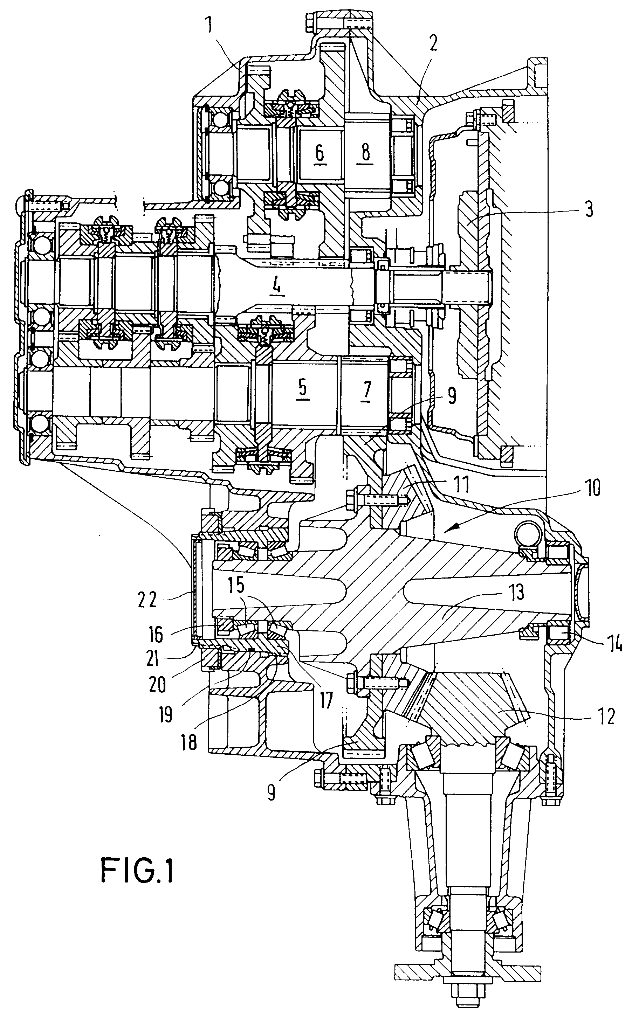

Das in Fig. 1 gezeigte Wechselgetriebe besteht im wesentlichen aus einem Getriebegehäuse, das aus zwei Teilen, einem Getriebegehäuse 1 und einem Kupplungs/Getriebegehäuse 2 gebildet wird. In dem Getriebegehäuse 1/2 sind eine mit der nur angedeuteten Kupplung 3 verbundene Eingangswelle 4 und zwei Vorgelegewellen 5 und 6 drehbar gelagert angeordnet.

Auf der Eingangswelle 4 und den Vorgelegewellen 5 und 6 sind in an sich bekannter Weise entsprechende Gangzahnräder zum Teil fest und zum Teil lose laufend angeordnet, wobei die lose laufenden Räder über entsprechende Synchronisiereinrichtungen mit ihrer jeweiligen Welle drehfest verbunden werden können.

Das vorliegende Wechselgetriebe weist eine Bauart auf, bei der in an sich bekannter Weise von beiden Vorgelegewellen 5 und 6 her Ausgangsritzel 7 und 8 auf ein Ausgangszahnrad 9 Drehmoment übertragen.

Mit dem Ausgangszahnrad 9 ist ein Kegelrad-Winkelgetriebe 10 drehfest verbunden, dessen Aufbau nachfolgend erläutert wird.

Das Kegelrad-Winkelgetriebe 10 besteht hierbei in an sich bekannter Weise aus einem Tellerrad 11 und einem Ritzel 12, die z.B. über eine Hypoidverzahnung miteinander in Eingriff stehen. Gemäß der Erfindung ist das Tellerrad 11 jedoch auf einem Achskörper 13 angeordnet, der aus dem gleichen Werkstoff wie das Getriebegehäuse 1/2 besteht, wodurch Probleme durch unterschiedliche Wärmeausdehnung zwischen dem Getriebegehäuse 1/2 und dem Achskörper 13 vermieden werden.

Der Achskörper 13 ist im Getriebegehäuse 1/2 über Lageranordnungen 14 und 15 drehbar gelagert, wobei die an einer Seite angeordnete Doppellageranordnung 15 über eine am Achskörper aufgeschraubte Spannmutter 16 vorgespannt wird. Die über die Spannmutter 16 am Achskörper 13 verspannte Doppellageranordnung 15 ist außen in einer Lagerhülse 17 aufgenommen, die über ein Gewinde 18 im Getriebegehäuse 1 aufgenommen wird, wobei sie über einen O-Ring 19 abgedichtet und über eine Kontermutter 20 mit Sicherungsblech festgelegt wird. Die Lagerhülse 17 ist an ihrem äußeren Ende mit einer Betätigungsverzahnung 21 versehen und wird durch einen eingepreßten Deckel 22 verschlossen.

Bei der Montage des Wechselgetriebes werden sämtliche Wellen mit den auf ihnen angeordneten Bauteilen vormontiert im Kupplungs/Getriebegehäuse 2 angeordnet, ebenso wie der Achskörper 13 mit der darauf vormontierten Doppellageranordnung 15, der Spannmutter 16 und der Lagerhülse 17. Beim Zusammenfügen von Getriebegehäuse 1 und Kupplungs/ Getriebegehäuse 2 muß die Lagerhülse 17 mittels der Betätigungsverzahnung 21 gedreht, d.h., in das Gewinde 18 eingeschraubt werden, bis die Flansche der beiden Gehäuseteile aneinanderliegen. Nachdem dann die beiden Gehäuseteile miteinander verbunden sind, wird durch weiteres Drehen der Lagerhülse 17 die Tellerrad-Ritzel-Einbaudistanz eingestellt.

Durch diese einfache Montage kann die bisher bei derartigen Getriebeanordnungen erforderliche Vermessung der Lagerabstände und die Einstellung der Lagervorspannung durch Auswahlscheiben und dergleichen vermieden werden. Dadurch, daß der Achskörper 13 aus dem gleichen Material wie das Getriebegehäuse 1/2 besteht, wird ein Lagervorspannungsabfall durch Wärmeausdehnung vermieden und damit eine Schiefstellung der Verzahnung ausgeschaltet. Dadurch kann eine Reduzierung der Verzahnungsgeräusche im Betrieb erreicht werden. Ein weiterer Vorteil besteht darin, daß der Achskörper 13 mit den darauf angeordneten Verzahnungsteilen 11 und 12 und der Lagerhülse 17 vormontiert an die Getriebe-Montagelinie geliefert werden kann.

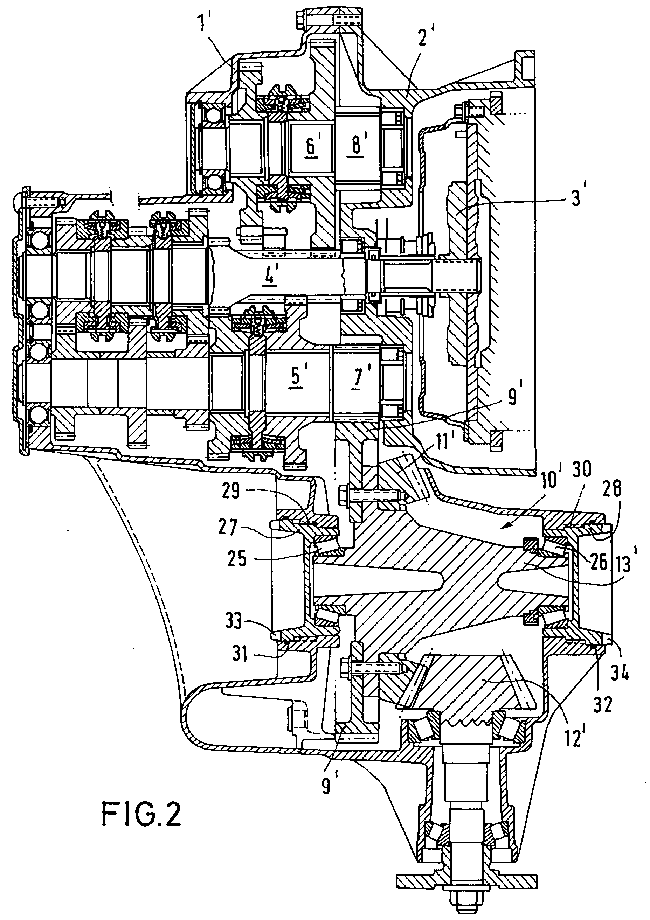

Bei der in Fig. 2 gezeigten Ausführungsform des Wechselgetriebes der Erfindung ist der allgemeine Getriebeaufbau übereinstimmend mit dem in Fig. 1 beschriebenen Aufbau und dementsprechend werden die gleichen Bezugszeichen verwendet, die nur durch einen Strichindex gekennzeichnet sind.

Der Unterschied dieser Ausführungsform liegt in der Lagerung des Achskörpers 13', der in diesem Fall in herkömmlicher Weise in zwei unmittelbar gegeneinander verspannten Kegelrollenlagern aufgenommen wird.

Das Kegelrad-Winkelgetriebe 10' besteht wieder aus einem Tellerrad 11' und einem Ritzel 12', die z.B. über eine Hypoidverzahnung miteinander in Eingriff stehen. Das Tellerrad 11' ist wieder auf einem Achskörper 13' angeordnet, der aus dem gleichen Werkstoff wie das Getriebegehäuse 1'/2' besteht, wodurch Probleme durch unterschiedliche Wärmeausdehnung zwischen den Getriebe- gehäuse 1'/2' und dem Achskörper 13' vermieden werden.

Der Achskörper 13' ist im Getriebegehäuse 1'/2' über Kegelrollenlager 25 und 26 drehbar gelagert, die jeweils in einer Lagerhülse 27 bzw. 28 aufgenommen sind, die über Gewinde 29 und 30 im Getriebegehäuse 1 bzw. im Kupplungs/Getriebegehäuse 2 eingeschraubt werden.

Die Lagerhülsen 27 und 28 werden hierbei über O-Ringe 31 und 32 zur Gehäuseöffnung hin abgedichtet und weisen an ihren freien Enden Betätigungsverzahnungen 33 und 34 auf, mit denen die Vorspannungseinstellung der Kegelrollenlageranordnung vorgenommen werden kann.

Selbstverständlich werden die Lagerhülsen 27 und 28 nach erfolgter Einstellung der Lagervorspannung und nach erfolgter Einstellung der Tellerrad-Ritzel-Einbaudistanz in bekannter Weise gegen ein unbeabsichtigtes Verdrehen gesichert.

Der wesentliche Unterschied zwischen den beiden in Fig. 1 und Fig. 2 gezeigten Ausführungsformen des erfindungsgemäßen Wechselgetriebes mit Kegelrad-Winkelgetriebe besteht darin, daß bei Fig. 1 eine Einstellung des Kegelrad-Winkelgetriebes von nur einer Seite her möglich ist, wohingegen bei der Ausführungsform nach Fig. 2 beide Seiten des Kegelrad-Winkelgetriebes zur Einstellung zugänglich sein müssen.

Das Getriebegehäuse 1/2 bzw. 1'/2' kann hierbei in dem Bereich, in dem der Achskörper 13 bzw. 13' angeordnet und gelagert werden muß, so ausgelegt werden, daß ohne Änderungen des Gehäuses das Ausgangszahnrad 9 bzw. 9' mit einem Ausgangs-Differentialgetriebe verbunden werden kann, von dem aus dann unmittelbar die Achsantriebswellen für die angetriebenen Vorderräder des Kraftfahrzeuges angetrieben werden können.

## Patentansprüche

1. Wechselgetriebe für Kraftfahrzeuge mit einer vorn eingebauten, querliegenden Antriebseinheit, bestehend aus einem in Linie mit einem Motor angeordneten Wechselgetriebe und einem vom Ausgangszahnrad (9) des Wechselgetriebes angetriebenen Ausgangsgetriebe (10), dessen Hauptachse im Getriebegehäuse (1/2) gelagert ist,
**dadurch gekennzeichnet**, daß
- das Ausgangsgetriebe (10 bzw. 10') ein Kegelrad- Winkelgetriebe ist, das aus einem Tellerrad (11 bzw. 11') und einem Ritzel (12 bzw. 12') besteht und
- das Tellerrad (11 bzw. 11') auf einem Achskörper (13 bzw. 13') angeordnet ist, der aus dem gleichen Werkstoff wie das Getriebegehäuse (1/2 bzw. 1'/2') besteht und der Achskörper (13 bzw. 13') in dem Bauraum angeordnet ist, der im Getriebegehäuse (1/2 1'/2') zur Aufnahme eines Ausgangs-Differentialgetriebes für ein Kraftfahrzeug mit Vorderradantrieb vorgesehen ist.

2. Wechselgetriebe nach Anspruch 1,
**dadurch gekennzeichnet**, daß
- die Lagerung des Achskörpers (13) aus einem Rollenlager (14) auf der einen Seite und einem über eine Spannmutter (16) vorgespannten Doppel-Wälzlager (15) an der anderen Seite besteht und
- die vorgespannte Doppel-Wälzlageranordnung (15) über eine an sich bekannte einstellbare Lagerhülse (16) zur Einstellung der Tellerrad-Ritzel-Einbaudistanz über ein Gewinde (18) im Getriebegehäuse (1/2) einstellbar angeordnet, über einen O-Ring (19) abgedichtet und über eine Kontermutter (20) festgelegt ist.

3. Wechselgetriebe nach Anspruch 1,
**dadurch gekennzeichnet**, daß
- die Lagerung des Achskörpers (13') aus zwei gegeneinander verspannten Kegelrollenlagern (25 und 26) besteht, die in Lagerhülsen (27 und 28) aufgenommen sind, die in Gewinden (29 und 30) in Getriebegehäuse (1'/2') eingeschraubt sind und wobei
- die Lagerhülsen (27 und 28) über O-Ringe (31 und 32) abgedichtet und über Betätigungsverzahnungen (33 und 34) zur Einstellung der Lagervorspannung und zur Einstellung der Tellerrad-Ritzel-Einbaudistanz einstellbar sind.

4. Wechselgetriebe nach den Ansprüchen 1 bis 3,
**dadurch gekennzeichnet**, daß
- die Lageraufnahmen für den Achskörper (13 bzw. 13') im Getriebegehäuse (1/2 bzw. 1'/2') derart ausgebildet sind, daß ohne Änderung des Gehäuses das Ausgangszahnrad (9 bzw. 9') mit einem Ausgangs-Differentialgetriebe verbunden werden kann, von dem aus dann unmittelbar die Achswellen für die angetriebenen Vorderräder des Kraftfahrzeuges angetrieben werden können.

## Claims

1. Gearbox for motorcars with a transverse installed front engine consisting of a gearbox, which is situated in line with a motor, and an output gear (10) driven by the output gearwheel (9) of the gearbox, the main axis of the output gear being mounted in the gearbox case (1/2), characterised in that
- the output gear (10 or 10')is a bevel, right-angle gear which consists of a ring gear (11 or 11') and a pinion (12 or 12') and
- the ring gear (11 or 11') is located on an axle shaft (13 or 13') which consists of the same material as the gearbox case (1/2 or 1'/2') and the axle shaft (13 or 13') is situated in the installation position provided in the gearbox case (1/2 or 1'/2') for holding an output differential gear for a motorcar with front-wheel drive.

2. Gearbox according to Claim 1,
characterised in that
- the bearing arrangement of the axle shaft (13) consists of a roller bearing (14) on one side and a double rolling-contact bearing (15), prestressed by means of an adapter nut (16), on the other side and
- the prestressed double rolling-contact bearing arrangement (15) is positioned in the gearbox case (1/2) in such a manner that it can be adjusted by means of a known, adjustable bearing bush (16) for setting the installation distance of ring gear and pinion via a thread (18), sealed by means of an O-ring (19) and fixed by means of a lock nut (20).

3. Gearbox according to Claim 1,
characterised in that
- the bearing arrangement of the axle shaft (13') consists of two tapered-roller bearings (25 and 26) which are stressed against one another, both held in bearing bushes (27 and 28) which are screwed into threads (29 and 30) in the gearbox case (1'/2'), whereby
- the bearing bushes (27 and 28) are sealed by means of O-rings (31 and 32) and can be adjusted by means of actuating gearing (33 and 34) for adjusting the prestressing of the bearings and for adjusting the installation distance of ring gear and pinion.

4. Gearbox according to Claims 1 to 3,
characterised in that
- the bearing receptacles for the axle shaft (13 or 13') in the gearbox case (1/2 or 1'/2') are designed in such a manner that the output gearwheel (9 or 9') can be connected to an output differential gear without altering the case, this making it possible for the axle shafts to be driven directly by the differential gear for the driven front wheels of the motorcar.

## Revendications

1. Boîte de vitesses pour des véhicules automobiles à ensemble d'entraînement monté transversalement à l'avant, constitué d'une boîte de vitesses disposée en ligne avec un moteur, et d'un engrenage de sortie (10) qui est entraîné par la roue dentée de sortie (9) de la boîte de vitesses et dont l'axe principal est monté dans le carter de boîte (1/2),
**caractérisée** en ce que
- l'engrenage de sortie (10 ou 10') est un engrenage d'angle à roues coniques, qui est constitué d'une couronne (11 ou 11') et d'un pignon (12 ou 12'), et
- la couronne (11 ou 11') est disposée sur un corps d'axe (13 ou 13') qui est réalisé dans le même matériau que le carter de boîte (1/2 ou 1'/2'), et le corps d'axe (13 ou 13') est disposé dans l'espace d'installation qui est prévu dans le carter de boîte (1/2 ou 1'/2') pour loger l'engrenage différentiel de sortie d'un véhicule automobile à traction avant.

2. Boîte de vitesses selon la revendication 1,
**caractérisée** en ce que
- le palier de montage du corps d'axe (13) est constitué d'un côté d'un palier à rouleaux (14) et, de l'autre côté, d'un palier double à roulement (15) précontraint au moyen d'un écrou tendeur (16), et
- le palier double à roulement (15) précontraint est, par l'intermédiaire d'une douille de palier réglable (17) en soi connue destinée à régler la distance d'installation entre la couronne et le pignon, disposé dans le carter de boîte (1/2) avec possibilité de réglage au moyen d'un filetage (18), étanché au moyen d'un joint torique (19) et fixé en position au moyen d'un contre-écrou (20).

3. Boîte de vitesses selon la revendication 1,
**caractérisée** en ce que
- le palier de montage du corps d'axe (13') est constitué de deux paliers à rouleaux coniques (25 et 26) contraints l'un par rapport à l'autre, qui sont logés dans des douilles de palier (27 et 28) qui sont vissées dans des filetages (29 et 30) dans le carter de boîte (1'/2'), et
- les douilles de palier (27 et 28) sont étanchées au moyen de joints toriques (31 et 32), et peuvent être réglées au moyen de dentures d'actionnement (33 et 34) destinées à régler la précontrainte du palier et la distance d'installation entre la couronne et le pignon.

4. Boîte de vitesses selon les revendications 1 à 3,
**caractérisée** en ce que
- les logements de palier pour le corps d'axe (13 ou 13') dans le carter de boîte (1/2 ou 1'/2') sont conçus de telle sorte que, sans modifier le carter, la roue dentée de sortie (9 ou 9') peut être reliée à un engrenage différente de sortie à partir duquel peuvent être ensuite directement entraînés les arbres d'essieu pour les roues avant motrices du véhicule automobile.
